# EUROPEAN PATENT SPECIFICATION

(11) **EP 3 011 171 B1**
(45) Date of publication and mention of the grant of the patent: **27.11.2019**
(21) Application number: 14744387.3
(22) Date of filing: 17.06.2014
(51) Int. Cl.: F03D 7/04, F03D 7/02, B64C 11/38, B63H 3/08, F03B 17/06, F03B 3/06

(54) **TURBINE WITH HYDRAULIC VARIABLE PITCH SYSTEM**
TURBINE MIT SYSTEM MIT HYDRAULISCHEM VARIABLEM NEIGUNGSWINKEL
TURBINE À SYSTÈME HYDRAULIQUE À PAS VARIABLE

(30) Priority: 17.06.2013 US 201361835755 P
(43) Date of publication of application: 27.04.2016
(73) Proprietor: Lockheed Martin Corporation, Bethesda, Maryland 20817 (US)
(72) Inventor: CLARK, Richard P., Jupiter, Florida 33458 (US); HEINZ, Michael F., Palm Beach Gardens, Florida 33418 (US); MORAZZANI, Ivette Marie, Palm Beach Gardens, Florida 33410 (US); URBAN, Braden, Palm Beach Gardens, Florida 33410 (US)
(74) Representative: Parker, Andrew James
(86) International application number: PCT/US2014/042668
(87) International publication number: WO 2014/204918

(56) References cited:
- EP-A1- 2 444 316
- DE-A1-102011 085 950
- GB-A- 2 074 661
- US-A- 4 792 281
- US-A- 5 213 470
- US-A1- 2010 014 976
- US-A1- 2010 209 245

## Description

### Field

This technical disclosure relates to a water or wind turbine, in particular to a water or wind turbine having a hydraulic variable pitch system.

### Background

Water or wind turbines extract energy from the flow of water or wind past the turbine. Examples of turbines include tidal turbines, river current turbines, wind turbines, and the like. In the case of tidal turbines, tidal flows are highly variable and subject to tremendous variation due to lunar spring/neap effects, large waves and turbulent flows.

Some water and wind turbine systems use fixed pitch rotors to simplify their operation and increase overall turbine reliability. However, fixed pitch rotors are subject to very large torques in high speed flow conditions because they do not have a load-shedding mechanism. They can either use low RPM stall operations to absorb energy at very high torque or simply shut down in fast-moving flows.

Other water or wind turbines include variable pitch systems to regulate turbine operations and shed loads from high speed flows. These variable pitch systems are large, heavy, and complex, and they reduce the turbine's reliability. In addition, existing variable pitch systems require the blade to depart from ideal shape near the root, reducing the efficiency of energy extraction.

A variable pitch system is known for example from EP 2 444 316.

### Summary

A variable pitch system for a water or wind turbine is described that is compact and highly reliable to reduce the cost of energy produced by the turbine. The variable pitch system uses a hydraulic system that includes a first hydraulic system and a second, redundant hydraulic system.

The turbine can be used in any type of fluid flow including, but not limited to, tidal flows, river currents, wind, and the like.

In one embodiment, the first and second hydraulic systems are each used during operation on a predetermined operating schedule. For example, one system can be used for a period of time, and then the first hydraulic system switches over to the second system which functions for a period of time, and then switches back to the first system, etc. This keeps both the first and second hydraulic systems from going stagnant for a long period of time, and reduces the wear on just one system.

Each of the first and second hydraulic systems also includes a pressure relief valve connected to the respective hydraulic cylinder. The pressure relief valve limits back pressure on the hydraulic system from dynamic loads on the turbine blades by enabling rotation of the blades to a pitch angle with less hydrodynamic torque. Additional safety features of the first and second hydraulic systems includes a relief valve that sets the operating pressure of the respective hydraulic system, valves that enable the hydraulic cylinder to float after a loss of power to the hydraulic systems, valves that hold the hydraulic cylinder position when commanded, and a spring that biases the turbine blades to an unloaded feathered pitch angle during a loss of power.

The pitch of all the blades are changed simultaneously using a common linkage mechanism. The linkage mechanism is suitably attached to the base end of each of the blades in an area defined by the base ends of the blades. The linkage mechanism uses a linearly moving shaft that is disposed along the rotation axis of the turbine to change the pitch. The shaft is actuated linearly by the hydraulic piston/cylinder (i.e. hydraulic actuator) of each of the first and second hydraulic systems. This construction helps to make the system compact.

The first and second hydraulic systems are completely contained in the nose region of the turbine, eliminating the need for a hydraulic slip ring interface. To aid in cooling, the hydraulic reservoirs for the first and second hydraulic systems can be attached to the front wall of the nose housing. The front wall of the nose housing is an advantageous location for mounting the hydraulic reservoirs because of the excellent cooling properties of this location which is surrounded by fast-moving water or air. Fins for enhanced heat extraction can be provided on the exterior of the nose housing at the front end.

### Drawings

Figure 1 is a side view of a portion of a turbine as described herein with a portion of the nose housing removed to illustrate interior components.
Figure 2 is a block diagram of the inner construction of the front portion of the turbine of Figure 1.
Figure 3 is a perspective side view of the rotor section of the turbine, with a portion of the nose housing removed to show the interior construction.
Figure 4 is detailed view of the rotatable mounting of one of the blade inserts.
Figure 5 illustrates the connection between the blade inserts and the hydraulic actuation system.
Figure 6 is an exterior perspective view of the nose housing.
Figure 7 illustrates the hydraulic systems of the variable pitch system.
Figure 8 illustrates a fail-safe feature in one of the hydraulic systems.

### Detailed Description

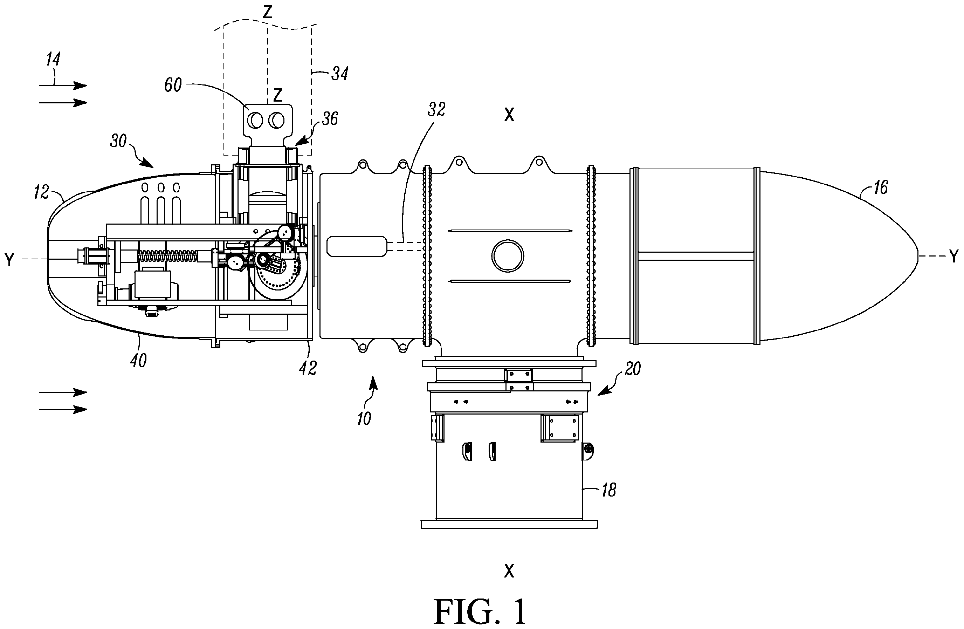

Figure 1 illustrates a turbine 10 as described herein. The turbine 10 is designed to be disposed relative to a flowing fluid so as to be driven by the fluid. In one embodiment, the turbine 10 is submerged in water that undergoes tidal flow. However, the turbine 10 could be submerged in any body of water where there is a flow of water that can be harnessed to produce electrical energy, for example in a river. The concepts described herein could also be employed on a turbine that is driven by wind.

In use, the turbine 10 includes a front end 12 that faces the flowing fluid indicated by the arrows 14 and a rear end 16. The turbine 10 is supported by a support structure 18. Optionally, a yaw drive mechanism 20 can be provided to rotate the turbine 10 about an axis X-X, which can be generally vertical, so as to point the turbine in a desired direction, typically facing the direction of flow of the fluid.

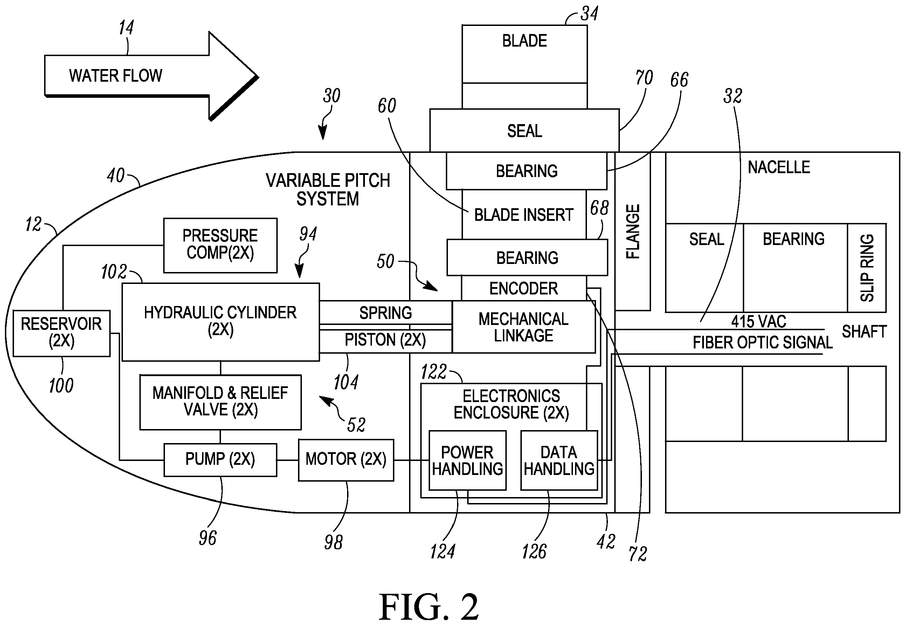

The turbine 10 includes a bladed rotor section 30 that is rotatably disposed at the front of the turbine for rotation about an axis Y-Y which can be generally horizontal and generally perpendicular to the axis X-X. Rotation of the rotor section 30 about the axis Y-Y rotates a shaft 32 shown in dashed lines in Figure 1 (also see Figure 2) that is used to produce electrical energy in a manner known to those of ordinary skill in the art. Instead of, or in addition to producing electrical energy, the rotation of the shaft 32 can be converted into other forms of useful energy, such as mechanical energy.

A plurality of blades 34 are mounted on the rotor section 30 which interact with the flowing fluid to produce the rotation of the rotor section. The blades 34 are illustrated in dashed lines but their specific construction is not relevant to this technical description. The blades 34 are rotatably supported at base ends 36 in a manner described below so that the pitch of the blades 34 can be changed by rotating the blades about generally longitudinal axes Z-Z of the blades to help control the loading on the blades. In the illustrated embodiment, there are three blades 34 mounted on the rotor section 30. But a larger or smaller number of blades could be provided.

With reference to Figures 1-3, the rotor section 30 includes a nose housing 40 that is substantially hollow and has a front end (corresponding to the front end 12) and a rear end 42. In use, the front end usually faces toward the incoming flow 14 of fluid. The nose housing 40 houses a pitch change linkage mechanism 50 that is suitably mechanically connected to the base ends of the blades 34 for simultaneously rotating the blades 34 about the longitudinal axes Z-Z. In addition, the nose housing 40 houses a hydraulic actuating mechanism 52 that is connected to the pitch change linkage mechanism 50 for actuating the pitch change linkage mechanism. All of the components of the pitch change linkage mechanism 50 and of the hydraulic actuating mechanism 52 are housed within the hose housing 40.

Turning now to the mounting of the blades 34 and Figures 1-2 and 4, each blade 34 includes a blade insert 60 that extends upwardly from the rotor 30 for use in fixing the blades 34 to the rotor 30. The base end of the insert 60 is formed as a cylindrical shaft that has an upper flange 62 and a lower flange 64. An upper bearing 66 rotatably supports the upper flange 62 and a lower bearing 68 rotatably supports the lower flange 64, allowing the blade insert 60 to rotate relative to the rotor about the axis Z-Z. A seal 70 can be provided to seal between the blade insert 60 and the housing 40 to prevent ingress of fluid or other material into the rotor housing. In a wind turbine, use of the seal 70 may be optional. An encoder 72 can be provided at the base end of the insert 60 to detect the amount of rotation of the insert during a pitch change movement.

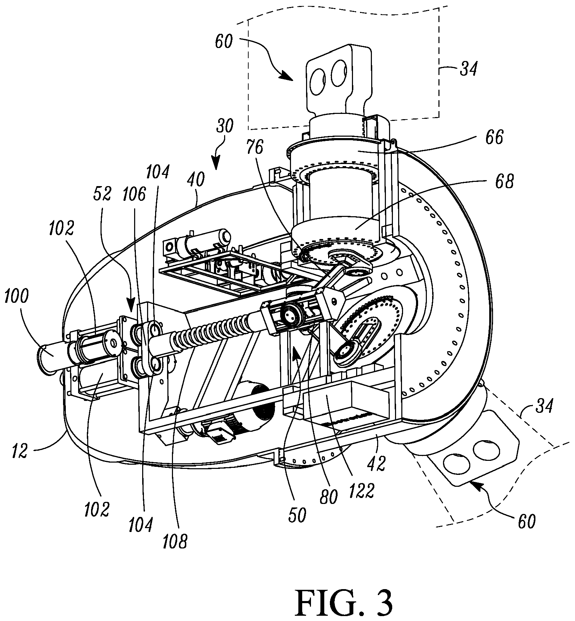

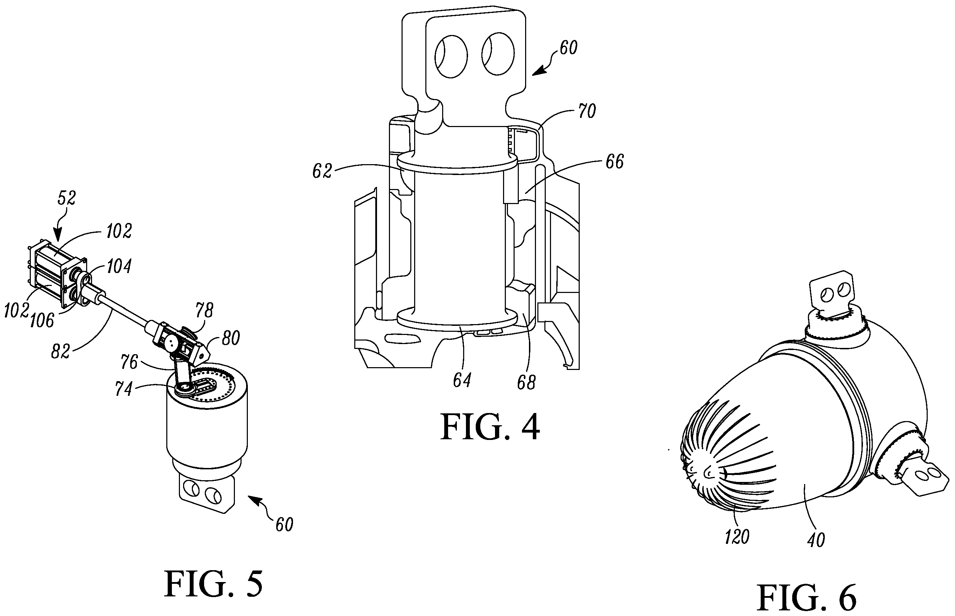

With reference to Figures 3 and 5, the blade inserts 60 are suitably mechanically connected to the pitch change linkage mechanism 50. In the illustrated example, the pitch change linkage mechanism 50 includes a pin 74 that is eccentrically attached to the end of each insert 60. Each pin 74 is fixed to a linkage arm 76. An inner end of each linkage arm 76 is fixed to a slide mechanism 78 that is slidably supported for movement in the Y-Y direction by a triangular slide support 80 that is fixed in the housing 40. The slide mechanism 78 is actuated via an actuating shaft 82 that is driven by the hydraulic actuating mechanism 52. The shaft 82 is coaxial to the rotation axis Y-Y, and the shaft is movable in a direction that is parallel to the rotation axis.

To change the pitch of the blades, as the slide mechanism 78 is actuated back and forth in the Y-Y direction relative to the slide support 80 by the shaft 82, that movement is transmitted to the linkage arms 76 which in turn causes the inserts 60 to rotate about the axes Z-Z which rotates the blades to change their pitch. Thus, the pitch change linkage mechanism 50 synchronously changes the pitch of all of the blades from the same actuating mechanism 52.

As evident from Figure 3, the pitch change linkage mechanism 50 is contained within the space between the ends of the blade inserts 60, which helps to make the turbine radially and axially compact.

With reference to Figures 1-3 and 7-8, the hydraulic actuating mechanism 52 includes a first hydraulic system 90 and a second hydraulic system 92. The hydraulic systems 90, 92 are identical in construction and are each located within the housing 40 of the rotor section 30. Even more specifically, the first hydraulic system 90 and the second hydraulic system 92 are located between the front end of the housing 40 and the blades 34.

Figure 2 designates each element of the hydraulic system 90, 92 as "[component](2x)" indicating that two of the component is present, one component for the first hydraulic system 90 and the second component for the second hydraulic system 92. Each of the first hydraulic system and a second hydraulic system includes a hydraulic actuator 94 connected to the pitch change linkage mechanism 50, a hydraulic pump 96, a motor 98 in driving engagement with the pump, and a reservoir 100.

Further, each of the actuators 94 includes a cylinder 102 and a piston 104. The pistons 104 are fixed to a yoke structure 106 (Figures 3 and 5) that is attached to an end of the actuating shaft 82. Therefore, axial movement of either of the pistons 104 results in axial movement of the shaft 82 via the yoke structure 106. As best seen in Figure 3, a biasing spring 108 surrounds the shaft 82 and acts between the slide support 80 and the yoke structure 106 to bias the yoke structure 106 in a direction toward the front end of the turbine 10. When hydraulic power is lost, the spring 108 biases the blades to an unloaded feathered position.

In one embodiment, the first and second hydraulic systems 90, 92 are each used during operation of the turbine 10 on a predetermined operating schedule. The second hydraulic system 92 is not simply a back-up system in case of failure of the first hydraulic system 90. Instead, both hydraulic systems are intended to function during normal use, which keeps both the first and second hydraulic systems from going stagnant for a long period of time and reduces the wear on just one of the hydraulic systems. For example, one hydraulic system can be used for a period of time, and then the first hydraulic system switches over to the second hydraulic system which functions for a period of time, and then switches back to the first hydraulic system, etc. However, the use of the two hydraulic systems 90, 92 provides fault tolerance so that if one system fails, the other system can operate all the time.

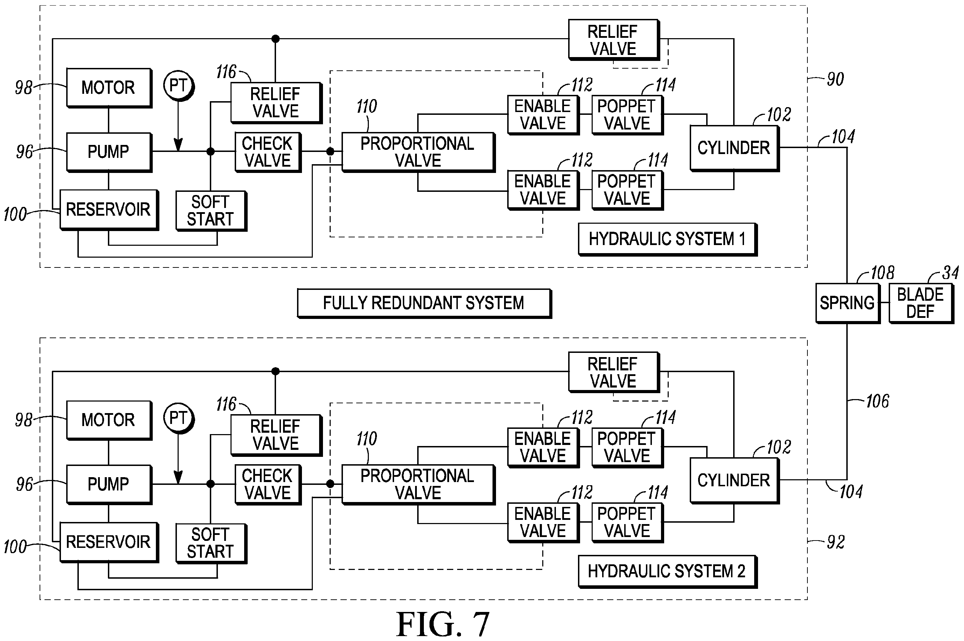

A schematic depiction of each of the hydraulic systems 90, 92 is illustrated in Figure 7. Each system 90, 92 includes a proportional valve 110 which moves the piston 104 in the appropriate direction to actuate the blades to change their pitch. The pitch of the blades can be changed any amount one finds suitable for the turbine 10. Each system 90, 92 also includes enable valves 112 that allow the pistons 104 to float after a loss of hydraulic pressure, and poppet valves 114 that hold the piston position when commanded. A relief valve 116 sets the hydraulic system 90, 92 to its functioning pressure.

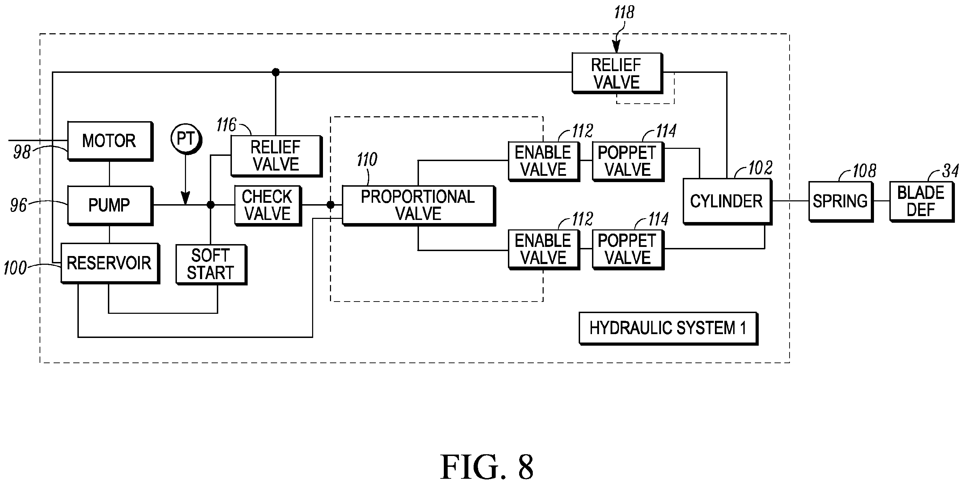

In addition, with reference to Figure 8, each system 90, 92 includes a relief valve 118 connected to each cylinder 102. The relief valve 118 protects the system against extreme dynamic loads on the blades 34 by relieving pressure in the system when high loads on the blades 34 push the shaft 82 and the piston 104 backwards toward the front of the turbine.

With reference to Figures 3 and 6, to aid in cooling, the reservoirs 100 can be positioned so as to be in contact with the front wall of the housing 40. The front wall of the nose housing is an advantageous location for mounting the hydraulic reservoirs because of the excellent cooling properties of this location which is surrounded by fast-moving water or air. Therefore, heat generated in the reservoirs 100 is transferred to the housing 40 which in turn is cooled by the fluid, such as water, flowing around the housing 40. To enhance heat transfer, fins 120 can be formed on the outside of the housing 40 at the front end.

Returning to Figures 2 and 3, the rotor section 30 can also include a pair of electronics enclosures 122, one for each of the hydraulic systems 90, 92. Each enclosure 122 can include a power handling circuit 124 for distributing power to the pump motors 98, and a data handling circuit 126 handling data commands, such as pitch change commands. The encoder 72 of each blade is connected to each data handling circuit 126. The use of two electronics enclosures 122 provides fault tolerance, so that if one electronics enclosure fails, the other can maintain operation.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A variable pitch system for a turbine (10), comprising:
a nose housing (40) having a front end (12) and a rear end (16, 42), the front end (12) facing toward incoming flow (14) of fluid;
a plurality of blade inserts (60) rotatably supported on the nose housing (40) at base ends (36) thereof for rotation about longitudinal axes of the blade inserts (60), and the blade inserts (60) are collectively rotatable about a turbine (10) rotation axis;
a pitch change linkage mechanism (50) connectable to the base ends (36) of the blade inserts (60) for rotating the blade inserts (60) about the respective longitudinal axes, the pitch change linkage mechanism (50) includes a shaft (82) that is coaxial to the turbine (10) rotation axis, and the shaft (82) is movable in a direction that is parallel to the turbine (10) rotation axis; and
a hydraulic actuating mechanism (52) connected to the shaft (82) for actuating the shaft (82) in the direction parallel to the turbine (10) rotation axis, the hydraulic actuating mechanism (52) includes a first hydraulic system (90) comprising a first hydraulic actuator (94) coupled to the shaft (82) and a second hydraulic system (92) comprising a second hydraulic actuator (94) coupled to the shaft (82), the first hydraulic system (90) being configured to selectively actuate the shaft (82) in either a first direction or a second direction independent of the second hydraulic system (92), and the second hydraulic system (92) being configured to selectively actuate the shaft (82) in either the first direction or the second direction independent of the first hydraulic system (90);
wherein the hydraulic actuator (94) of each of the first hydraulic system (90) and the second hydraulic system (92) is located between the front end (12) and the blade inserts (60).

2. The variable pitch system for a turbine according to claim 1, wherein each of the first and second hydraulic systems includes a pressure relief valve connected to the respective hydraulic actuator, wherein each of the pressure relief valves is configured to limit back pressure on the respective first and second hydraulic systems from dynamic loads by enabling rotation of the blade inserts to a pitch angle with less hydrodynamic torque.

3. The variable pitch system for a turbine according to claim 2, wherein each of the first and second hydraulic systems include at least two or more of:
a relief valve that sets the operating pressure of the respective hydraulic system;
valves that enable a respective hydraulic cylinder of the respective hydraulic system to float after a loss of power to the hydraulic systems; and
valves that hold the respective hydraulic cylinder position when commanded.

4. The variable pitch system for a turbine according to any one of claims 1 to 3, wherein the pitch change linkage mechanism is located within the nose housing;
wherein each of the first hydraulic system and the second hydraulic system includes:
a hydraulic pump, a motor in driving engagement with the pump, and a reservoir; and
wherein the hydraulic pump, the motor, and the reservoir of each of the first hydraulic system and the second hydraulic system are located between the front end and the blade inserts.

5. The variable pitch system for a turbine according to any one of claims 1 to 4, further comprising a spring acting on the shaft that biases the shaft in a direction to actuate the blade inserts to an unloaded feathered pitch angle position during a loss of power.

6. The variable pitch system for a turbine according to any one of claims 1 to 5, further comprising a controller connected to the first and second hydraulic systems and configured to operate the first and second hydraulic systems on an alternating operational schedule whereby the first hydraulic system operates for a period of time followed by operation of the second hydraulic system for a period of time.

7. A turbine, comprising:
the variably pitch system according to claim 1;
a bladed rotor section wherein the nose housing is rotatable about the turbine rotation axis;
the plurality of blade inserts are rotatable with the nose housing about the turbine rotation axis;
the pitch change linkage mechanism is located within the nose housing;
each of the first hydraulic system and the second hydraulic system further includes:
a hydraulic pump, a motor in driving engagement with the pump, and a reservoir.

8. The variable pitch system for a turbine according to claim 1, wherein the first hydraulic actuator is coupled to the shaft via a yoke, and the second hydraulic actuator is coupled to the shaft via the yoke.

9. The variable pitch system for a turbine according to claim 1, wherein the pitch change linkage mechanism comprises:
a slide mechanism coupled to the shaft; and
a plurality of linkage arms, each linkage arm having a corresponding inner end coupled to the slide mechanism and a corresponding other end eccentrically coupled to a corresponding blade insert, wherein movement of the slide mechanism causes each linkage arm to rotate the corresponding blade insert about a corresponding rotation axis.

## Patentansprüche

1. Variables Pitchsystem für eine Turbine (10), umfassend:
ein Nasengehäuse (40) mit einem vorderen Ende (12) und einem hinteren Ende (16, 42), wobei das vordere Ende (12) dem einströmenden Fluidstrom (14) zugewandt ist;
eine Vielzahl von Schaufeleinsätzen (60), die drehbar am Nasengehäuse an dessen Sockelenden (36) gelagert sind, um sich um die Längsachse der Schaufeleinsätze (60) zu drehen, und wobei die Schaufeleinsätze (60) gemeinsam um eine Rotationsachse einer Turbine (10) drehbar sind;
einen mit den Sockelenden (36) der Schaufeleinsätze (60) verbindbaren Verbindungsmechanismus zur Neigungswinkeländerung (50) zum Drehen der Schaufeleinsätze (60) um die jeweiligen Längsachsen, wobei der Verbindungsmechanismus zur Neigungswinkeländerung (50) eine Welle (82) aufweist, die koaxial zur Rotationsachse der Turbine (10) ist, und wobei die Welle (82) in einer Richtung beweglich ist, die parallel zur Rotationsachse der Turbine (10) verläuft; und
einen hydraulischen Betätigungsmechanismus (52), der mit der Welle (82) verbunden ist, um die Welle (82) in der Richtung parallel zur Drehachse der Turbine (10) zu betätigen, wobei der hydraulische Betätigungsmechanismus (52) ein erstes Hydrauliksystem (90) umfasst, das einen ersten Hydraulikantrieb (94) aufweist, der mit der Welle (82) gekoppelt ist und ein zweites Hydrauliksystem (92) umfasst, das einen zweiten Hydraulikantrieb (94) aufweist, der mit der Welle (82) gekoppelt ist, wobei das erste Hydrauliksystem (90) konfiguriert ist, um die Welle (82) selektiv entweder in eine erste Richtung oder in eine zweite Richtung unabhängig von dem zweiten Hydrauliksystem (92) zu betätigen, und wobei das zweite Hydrauliksystem (92) konfiguriert ist, um die Welle (82) unabhängig vom ersten Hydrauliksystem (90) selektiv entweder in die erste Richtung oder in die zweite Richtung zu betätigen;
wobei der Hydraulikantrieb (94) von dem ersten Hydrauliksystem (90) und dem zweiten Hydrauliksystem (92) jeweils zwischen dem vorderen Ende (12) und den Schaufeleinsätzen (60) angeordnet ist.

2. Variables Pitchsystem für eine Turbine nach Anspruch 1, wobei jedes der ersten und zweiten Hydrauliksysteme ein Überdruckventil aufweist, das mit dem jeweiligen Hydraulikantrieb verbunden ist, wobei jedes der Überdruckventile konfiguriert ist, um den Gegendruck auf das jeweilige erste und zweite Hydrauliksystem durch dynamische Lasten zu begrenzen, indem es die Drehung der Schaufeleinsätze auf einen Neigungswinkel mit weniger hydrodynamischem Drehmoment ermöglicht.

3. Variables Pitchsystem für eine Turbine nach Anspruch 2, wobei jedes der ersten und zweiten Hydrauliksysteme mindestens zwei oder mehr der folgenden Elemente aufweist:
ein Überdruckventil, das den Betriebsdruck des jeweiligen Hydrauliksystems einstellt;
Ventile, die es einem jeweiligen Hydraulikzylinder des jeweiligen Hydrauliksystems ermöglichen, nach einem Leistungsverlust der Hydrauliksysteme zu floaten; und
Ventile, die die jeweilige Hydraulikzylinderposition halten, wenn sie angewiesen werden.

4. Variables Pitchsystem für eine Turbine nach einem der Ansprüche 1 bis 3, wobei sich der Verbindungsmechanismus zur Neigungswinkeländerung innerhalb des Nasengehäuses befindet;
wobei jedes der ersten und zweiten Hydrauliksysteme Folgendes aufweist:
eine Hydraulikpumpe, einen Motor in Antriebsverbindung mit der Pumpe und einen Behälter; und
wobei die Hydraulikpumpe, der Motor und der Behälter von dem ersten und zweiten Hydrauliksystem jeweils zwischen dem vorderen Ende und den Schaufeleinsätzen angeordnet sind.

5. Variables Pitchsystem für eine Turbine nach einem der Ansprüche 1 bis 4, ferner aufweisend eine Feder, die auf die Welle wirkt, die die Welle in einer Richtung vorspannt, um die Neigungswinkel der Schaufeleinsätze während eines Leistungsverlustes in eine unbelastete Segelstellung zu bringen.

6. Variables Pitchsystem für eine Turbine nach einem der Ansprüche 1 bis 5, ferner umfassend eine Steuerung, die mit dem ersten und zweiten Hydrauliksystem verbunden und konfiguriert ist, um das erste und zweite Hydrauliksystem nach einem wechselnden Betriebsplan zu betreiben, wobei das erste Hydrauliksystem über einen Zeitraum betrieben wird, gefolgt vom Betrieb des zweiten Hydrauliksystems über einen bestimmten Zeitraum.

7. Eine Turbine, umfassend:
das variable Pitchsystem nach Anspruch 1;
einen beschaufelten Rotorabschnitt, wobei das Nasengehäuse um die Rotationsachse der Turbine drehbar ist;
wobei die Vielzahl von Schaufeleinsätzen mit dem Nasengehäuse um die Rotationsachse der Turbine drehbar sind;
der Verbindungsmechanismus zur Neigungswinkeländerung innerhalb des Nasengehäuses angeordnet ist;
wobei jedes der ersten und zweiten Hydrauliksysteme weiterhin Folgendes aufweist:
eine Hydraulikpumpe, einen Motor in Antriebsverbindung mit der Pumpe und einen Behälter.

8. Variables Pitchsystem für eine Turbine nach Anspruch 1, wobei der erste Hydraulikantrieb über einen Bügel mit der Welle gekoppelt ist, und der zweite Hydraulikantrieb über den Bügel mit der Welle gekoppelt ist.

9. Variables Pitchsystem für eine Turbine nach Anspruch 1, wobei der Verbindungsmechanismus zur Neigungswinkeländerung Folgendes aufweist:
einen mit der Welle gekoppelten Gleitmechanismus; und
eine Vielzahl von Verbindungsarmen, wobei jeder Verbindungsarm ein entsprechendes inneres Ende aufweist, das mit dem Gleitmechanismus gekoppelt ist und ein entsprechendes anderes Ende, das exzentrisch mit einem entsprechenden Schaufeleinsatz gekoppelt ist, wobei die Bewegung des Gleitmechanismus bewirkt, dass jeder Verbindungsarm den entsprechenden Schaufeleinsatz um eine entsprechende Rotationsachse dreht.

## Revendications

1. Système de pas variable pour une turbine (10), comprenant :
un boîtier de nez (40) ayant une extrémité avant (12) et une extrémité arrière (16, 42), l'extrémité avant (12) faisant face vers un écoulement incident de fluide (14) ;
une pluralité d'inserts formant pales (60) supportés en rotation sur le boîtier de nez (40) à leur extrémité de base (36) pour une rotation autour d'axes longitudinaux des inserts formant pales (60), et les inserts formant pales (60) sont collectivement capables de rotation autour d'un axe de rotation de la turbine (10) ;
un mécanisme à tringlerie de changement de pas (50) susceptible d'être relié aux extrémités de base (36) des inserts formant pales (60) pour faire tourner les inserts formant pales (60) autour des axes longitudinaux respectifs,
le mécanisme à tringlerie de changement de pas (50) incluant un arbre (82) qui est coaxial à l'axe de rotation de la turbine (10), et l'arbre (82) est déplaçable dans une direction qui est parallèle à l'axe de rotation de la turbine (10) ; et
un mécanisme d'actionnement hydraulique (52) relié à l'arbre (82) pour actionner l'arbre (82) dans la direction parallèle à l'axe de rotation de la turbine (10), le mécanisme d'actionnement hydraulique (52) incluant un premier système hydraulique (90) comprenant un premier actionneur hydraulique (94) couplé à l'arbre (82) et un second système hydraulique (92) comprenant un second actionneur hydraulique (94) couplé à l'arbre (82), le premier système hydraulique (90) étant configuré pour actionner sélectivement l'arbre (82) soit dans une première direction soit dans une seconde direction indépendamment du second système hydraulique (92), et le second système hydraulique (92) étant configuré pour actionner sélectivement l'arbre (82) soit dans la première direction soit dans la seconde direction indépendamment du premier système hydraulique (90) ;
dans lequel l'actionneur hydraulique (94) de chacun du premier système hydraulique (90) et du second système hydraulique (92) est situé entre l'extrémité avant (12) et les inserts formant paie (60).

2. Système de pas variable pour une turbine selon la revendication 1, dans lequel chacun du premier et du second système hydraulique inclut une valve de détente de pression reliée à l'actionneur hydraulique respectif, dans lequel chacune des valves de détente de pression est configurée pour limiter une contrepression sur le premier et le second système hydraulique respectif provenant de charges dynamiques en permettant une rotation des inserts formant pales à un angle de pas présentant un couple hydrodynamique moindre.

3. Système de pas variable pour une turbine selon la revendication 2, dans lequel chacun du premier et du second système hydraulique inclut au moins deux ou plusieurs des éléments suivants :
une valve de détente qui règle la pression de fonctionnement du système hydraulique respectif ;
des valves qui permettent à un cylindre hydraulique respectif du système hydraulique respectif de flotter après une perte de puissance vers les systèmes hydrauliques ; et
des valves qui maintiennent la position du cylindre hydraulique respectif lorsqu'elles en reçoivent l'ordre.

4. Système de pas variable pour une turbine selon l'une quelconque des revendications 1 à 3, dans lequel le mécanisme à tringlerie de changement de pas est situé à l'intérieur du boîtier de nez ;
dans lequel chacun du premier système hydraulique et du second système hydraulique inclut :
une pompe hydraulique, un moteur en engagement d'entraînement avec la pompe, et un réservoir ; et
dans lequel la pompe hydraulique, le moteur, et le réservoir de chacun du premier système hydraulique et du second système hydraulique sont situés entre l'extrémité avant et les inserts formant pales.

5. Système de pas variable pour une turbine selon l'une quelconque des revendications 1 à 4, comprenant en outre un ressort agissant sur l'arbre, qui sollicite l'arbre dans une direction pour actionner les inserts formant pales vers une position d'angle de pas en drapeau non chargé pendant une perte de puissance.

6. Système de pas variable pour une turbine selon l'une quelconque des revendications 1 à 5, comprenant en outre un contrôleur relié au premier et au second système hydraulique et configuré pour faire fonctionner le premier et le second système hydraulique suivant un programme de fonctionnement alterné tel que le premier système hydraulique fonctionne pendant une période temporelle suivie du fonctionnement du second système hydraulique pendant une période temporelle.

7. Turbine, comprenant
le système de pas variable selon la revendication 1 ;
un tronçon de rotor avec pales, dans lequel le boîtier de nez est capable de rotation autour de l'axe de rotation de la turbine ;
la pluralité d'inserts formant pales sont capables de rotation avec le boîtier de nez autour de l'axe de rotation de la turbine ;
le mécanisme à tringlerie de changement de pas est situé à l'intérieur du boîtier de nez ;
chacun du premier système hydraulique et du second système hydraulique inclut en outre :
une pompe hydraulique, un moteur en engagement d'entraînement avec la pompe, et un réservoir.

8. Système de pas variable pour une turbine selon la revendication 1, dans lequel le premier actionneur hydraulique est couplé à l'arbre via un étrier, et le second actionneur hydraulique est couplé à l'arbre via l'étrier.

9. Système de pas variable pour une turbine selon la revendication 1, dans lequel le mécanisme à tringlerie de changement de pas comprend :
un mécanisme à coulisse couplé à l'arbre ; et
une pluralité de bras de tringlerie, chaque bras de tringlerie ayant une extrémité intérieure correspondante couplée au mécanisme à coulisse et une autre extrémité correspondante couplée de manière excentrique à un insert formant pale correspondant, dans lequel un mouvement du mécanisme à coulisse amène chaque bras de tringlerie à faire tourner l'insert formant pale correspondant autour d'un axe de rotation correspondant.
